# EUROPÄISCHE PATENTANMELDUNG

(11) **EP 4 029 987 A1**
(43) Veröffentlichungstag der Anmeldung: **20.07.2022**
(21) Anmeldenummer: 21151444.3
(22) Anmeldetag: 13.01.2021
(51) Int. Cl.: D21H 17/51, C08J 5/24, D21H 17/52, D21H 21/34

(54) **FLAMMHEMMENDES IMPRÄGNAT UND LAMINAT, PLATTE MIT FLAMMHEMMENDEM IMPRÄGNAT, VERFAHREN ZUR HERSTELLUNG DES IMPRÄGNATS UND DER PLATTE**

(71) Anmelder: Fritz Egger GmbH & Co. OG, 6380 St. Johann in Tirol (AT); Ecochem International NV, 2550 Olen (BE)
(72) Erfinder: Riepertinger, Manfred, 83093 Bad Endorf (DE); Herzog, Andreas, 6380 St. Johann in Tirol (AT)
(74) Vertreter: Cohausz & Florack

(57) **Zusammenfassung**

Die Erfindung betrifft ein Imprägnat für die Verwendung in einem Laminat, mit einer Schicht (2) aus einem zellulosebasierten Material und mit mindestens einer Imprägnierung mit einem Kunstharz, bei der das technische Problem, Imprägnate und Laminate und die daraus hergestellten Platten in Bezug auf einen Brandschutz zu verbessern und eine einfachere Herstellung anzugeben, dadurch gelöst wird, dass mindestens eine Imprägnierung ein flammhemmendes Additiv aufweist. Die Erfindung betrifft auch ein Laminat mit einem Imprägnat, eine Platte mit einer Trägerplatte und einem Imprägnat und ein Verfahren zu deren Herstellung.

## Beschreibung

Die Erfindung betrifft ein Imprägnat für die Verwendung in einem Laminat mit einer Schicht aus einem zellulosebasierten Material und mit mindestens einer Imprägnierung mit einem Kunstharz. Die Erfindung betrifft auch ein Laminat, beispielsweise in Form eines Schichtstoffes, einer beschichteten Holzwerkstoff- oder Kunststoffplatte oder einer Kompaktplatte mit einem zuvor genannten Imprägnat. Die Erfindung betrifft auch verschiedene Verfahren zur Herstellung eines Imprägnats und ein Verfahren zur Herstellung eines Laminats, beispielsweise in Form eines Schichtstoffes, einer beschichteten Holzwerkstoff- oder Kunststoffplatte oder einer Kompaktplatte.

Im Stand der Technik werden Imprägnate für den Aufbau von verschiedensten Laminaten eingesetzt. Sie dienen unterschiedlichen Funktionen als stabilisierende Schichten, als Barriereschichten und zur Beschichtung unterschiedlicher Trägerplatten mit Dekorschichten. Imprägnate werden dabei auch für Kernschichten in Laminaten verwendet.

Imprägnate bestehen allgemein aus flächigen Lagen, insbesondere verschiedensten Papieren, die mit einem Kunstharz imprägniert und getrocknet sind. Das Kunstharz liegt in einem Imprägnat in der sogenannten B-Stufe vor, in der das Harz fest geworden, aber immer noch klebrig ist. Bei Verarbeitung des Imprägnats wird dieses unter hohem Druck und Temperatur dann gemeinsam mit weiteren Imprägnaten und/oder sonstigen Schichten, zu einem Laminat verpresst, wobei es zur Aushärtung des Kunstharzes, also einer Vernetzungsreaktion seiner Bestandteile kommt. Es werden so verschieden formstabile, harte und chemisch beständige Schichten erhalten, die eine breite Anwendung in verschiedensten Bereichen der Technik und verschiedenen Gebrauchsgegenständen Anwendung finden.

Im Möbel- und Innenausbau sowie für Schichtstoffe und Kompaktplatten, die auch im Außenbereich eingesetzt werden können, finden bevorzugt verschiedenste Papiere für die Herstellung von Imprägnaten und in der Folge von Laminaten Anwendung. So werden Dekorpapiere, die einfarbig ausgestaltet sind oder auch mit Mustern von zu imitierenden Materialien wie Holz- oder Steinmotiven bedruckt sein können, angewendet. Ebenso werden Overlaypapiere, die die dekorativen Schichten vor äußeren Einflüssen schützen sollen, oder Kernpapiere, die überwiegend mechanische Funktion haben, eingesetzt. Entsprechend weit reicht das Spektrum der Arten von Papieren sowie deren Flächengewichte. Kernpapiere für Schichtstoffe, Kompaktplatten oder so genannte Underlays, die zwischen einer Trägerplatte und einer dekorativen Lage eingesetzt werden, bestehen vorzugsweise aus Kraftpapieren oder auch Natronkraftpapieren. Das Flächengewicht dieser Kernpapiere liegt im Bereich von 40 - 300 g/m², wobei hohe Grammaturen vorwiegend für Kompaktplatten verwendet werden.

Laminate, die zumindest ein Imprägnat aus einem Kernpapier und ein Imprägnat aus einem Dekorpapier aufweisen, werden auch als Schichtstoffe bezeichnet und stellen ein Vorprodukt dar, das wiederum als ein vielseitig einsetzbarer Werkstoff bekannt ist, der in Kombination mit Holzwerkstoffen oder anderen Trägermaterialien, zu so genannten Verbundelementen verarbeitet wird. Die Anwendungen sind vielfältig und erfordern den Einsatz verschiedener Qualitäten, die auf die späteren Einsatzgebiete abzustimmen sind. Klassische Anwendungen bzw. Einsatzbereiche sind z.B. Küchenindustrie, Türenindustrie, Büromöbelindustrie, Messebau, Ladenbau, dekorativer Innenausbau, Fußböden, Schiffsbau und Fahrzeugbau. Unter Schichtstoffen werden somit dekorative Laminate verstanden, die unterschiedlichen Anforderungen genügen können.

Für dekorative Zwecke eingesetzte Schichtstoffe sind unter anderem dekorative Laminate auf Basis härtbarer Harze. Sie sind mehrschichtig aufgebaut und bestehen beispielsweise zumindest aus einem melaminharzimprägnierten Dekorpapier als Dekorschicht und einem oder mehreren mit Phenolharz imprägnierten Natronkraftpapieren als Kernlagen, die unter hohem Druck und Wärme miteinander verpresst werden. Der Laminataufbau, Harz- und Papierqualitäten, Oberflächenstrukturen, die Verwendung spezieller Overlays (Schutzschichten) sowie die Pressparameter bei der Herstellung entscheiden über die Laminatqualität und somit über die spätere Anwendung bzw. das Einsatzgebiet.

Die dekorative Seite des Laminates, die Dekorschicht, kann aus Dekorpapier bestehen, das mit einem Holzdekor oder Fantasiedekor bedruckt ist, oder einfarbig ist, also ein Uni- oder Weißdekor aufweist. Die Flächengewichte der Dekorpapiere liegen in der Regel zwischen 50 - 160 g/m².

Ein Overlay ist ein gebleichtes, transparentes Papier mit hohem Harzaufnahmevermögen und wird zum Schutz des Dekors, insbesondere des Druckbildes von bedruckten Dekorpapieren und zur Verbesserung der Abriebbeständigkeit eingesetzt. Das Overlay-Papier kann wie ein Dekorpapier als separater Bestandteil beim Verpressen mit einer Platte oder als Teil eines Schichtstoffes eingesetzt werden.

Melamin-Formaldehyd-Harze ergeben transparente und harte Beschichtungen und sind daher bestens als Oberflächenschicht von dekorativen Laminaten geeignet. Zur Imprägnierung der Kernlagen werden, nicht zuletzt aus Kostengründen, relativ elastische Phenol-Formaldehyd-Harze eingesetzt.

Dekorative Laminate können also Zellulosefaserbahnen bzw. Papier, die mit wärmehärtenden Harzen imprägniert sind, aufweisen. Andere natürliche oder künstliche Materialien können ebenfalls als Trägermaterial für den Harz eingesetzt werden. So sind Laminate aus mit Harz imprägnierten Glasfaservliesen ebenfalls bekannt. Die Schichten, vorzugsweise die Papierschichten werden miteinander zum Laminat verbunden. Die Zufuhr von Wärme und Druck bewirkt dabei ein Fließen und anschließendes Aushärten der Harze. Durch die Vernetzung der Harze, vorzugsweise verstärkt durch die Zellulosefasern der Papiere, entsteht ein sehr dichtes Material mit geschlossener Oberfläche. Dabei können einzelne Papierschichten, auch eine äußere Papierschicht, vor dem Verpressen unbeharzt sein, da beim Verpressen der Harz auch zuvor unbeharzte Schichten durchdringt.

Bei der Herstellung von Schichtstoffen werden die Schichten des Schichtaufbaus zunächst übereinander gelegt und anschließend zwischen zwei Pressmittel in Form von Presseblechen oder Pressbändern, gegebenenfalls unter Zulage von so genannten Strukturgebern gebracht. Diese Pressmittel sind auf eine vorgegebene Temperatur aufgeheizt, so dass während des Pressvorgangs nicht nur ein ausreichender Druck sondern auch die benötigte Temperatur auf die Schichten aufgebracht wird. Das Hochdruckverfahren ist also durch die gleichzeitige Anwendung von Wärme (Temperatur ≥ 120 °C) und einem hohen Druck (≥ 25 bar) bestimmt, damit die wärmehärtbaren Harze fließen und anschließend aushärten, um einen homogenen, nicht porösen Werkstoff mit erhöhter Dichte (≥ 1,35 g/cm³) und der geforderten Oberflächenbeschaffenheit herzustellen.

Als Herstellverfahren für Schichtstoffe sind CPL-Verfahren, CPL ist die Abkürzung für Continuous Pressed Laminates, und HPL-Verfahren, HPL ist die Abkürzung für High Pressure Laminates, bekannt.

CPL wird in kontinuierlich arbeitenden Doppelbandpressen mit einem Pressdruck zwischen 25 und 50 bar und Temperaturen zwischen 150 °C und 170 °C hergestellt. Abhängig von der Laminatdicke und der Presszonenlänge variiert die Vorschubgeschwindigkeit zwischen 8 und 30 m/min.

HPL wird bisher in diskontinuierlich arbeitenden Ein- oder Mehretagenpressen hergestellt. Bei Mehretagenpressen wird eine Mehrzahl von Einheiten aus zwei Pressblechen und dazwischen angeordneten Schichten übereinander gestapelt, die durch einen einzigen Pressvorgang mit einem Pressdruck zwischen 70 und 80 bar und Temperaturen von über 120 °C verpresst werden. Die Mehretagenpressen können bis zu 45 Etagen haben und jede Etage wird mit bis zu 24 Laminatlagen (Dicke ca. 0,50 bis 1,90 mm) gefüllt. Abhängig von der Pressenbeschickung und der maximalen Temperatur dauert der komplette Presszyklus inclusive einer optionalen Rückkühlung etwa 100 Minuten.

Nach der Herstellung des Schichtstoffes wird dieser in einem separaten Verfahrensschritt und mit zeitlicher Verzögerung, mit einem Trägermaterial bzw. einer Trägerplatte verklebt. Mit einem Schichtstoff versehene Holzwerkstoffplatten, werden regelmäßig für höher belastete Bauteile, wie Küchenarbeitsplatten oder auch Schreibtische sowie Fußböden mit hohen Beanspruchungsklassen eingesetzt.

Weniger belastete Oberflächen wie sie beispielsweise sonstigen Möbeloberflächen genügen, können auch durch direktes Verpressen von Trägerplatten mit Imprägnaten hergestellt werden. Ein solches Herstellverfahren wird auch als DPL (Direct Pressed Laminate) bezeichnet. Unter erhöhtem Druck und Temperatur können auch hier verschiedenste Aufbauten zu hochwertigen Oberflächen führen. Erhöhte Widerstandsfähigkeit gegen mechanische Belastung wird auch hier durch eine oder auch mehrere Lagen von imprägniertem Overlaypapier erreicht. Sind höhere mechanische Festigkeiten oder die Einbringung tieferer Strukturen gefordert, können auch hier imprägnierte Kernpapiere eingesetzt werden, die unterhalb der Dekorschicht angeordnet werden und als Underlays bezeichnet werden.

Die genannten Imprägnate bzw. Laminate werden im gesamten Bereich des Gebäudeausbaus als Möbelbauteile, Fußboden-, Wand- und Deckenbekleidungen, aber auch als Bestandteil von Kompaktplatten und somit auch im Außenbereich, etwa für die Bekleidung von Fassaden oder als Träger für Photovoltaikmodule eingesetzt. Daher unterliegen die Imprägnate bzw. Laminate, gegebenenfalls in Verbindung mit den Trägerplatten auch den Anforderungen an den Brandschutz. Dazu ist es bekannt, Trägerplatten aus Holzwerkstoff durch Zugabe von Additiven brandhemmend bzw. flammhemmend auszuführen.

Eine Erhöhung der Brandbeständigkeit bei Holzwerkstoffen kann auf verschiedene Weise erfolgen.

Zum einen werden feuerhemmende bzw. flammhemmende Additive in Form von Brandschutzmitteln zu den Spänen für die Herstellung der Holzwerkstoffplatten hinzugefügt. Dazu werden die flammhemmenden Additive in trockener oder flüssiger Form während der Herstellungsprozesses homogen eingearbeitet.

Zum anderen werden als flammhemmende Additive einerseits mineralische Bindemittel wie Zement oder Magnesit oder andererseits Gesteinsmehle wie Calciumcarbonat und -sulfat und Aluminiumoxide verwendet.

Die verschiedenen flammhemmenden Additive verfügen über unterschiedliche Wirkungsweisen.

Zum einen sind thermische wirkende Additive bekannt, bei denen die Wärmemenge verbraucht wird, beispielsweise in Form einer endothermen chemischen Reaktion. Diese Reaktion läuft vor allem im Bereich von 200 - 300 °C ab. Beispielsweise werden dafür Borsäure, Phosphatsalze oder Aluminiumhydroxid eingesetzt.

Zum anderen können flammhemmende Additive durch die Zugabe chemischer Verbindungen chemisch wirken. Bei der thermischen Zersetzung der chemischen Verbindungen werden nichtbrennbare Gase abgespalten, die den Sauerstoff so weit verdünnen, dass das Brandgeschehen eingegrenzt oder ganz verhindert wird. Dafür werden beispielsweise Phosphor-Stickstoff-Verbindungen eingesetzt.

Des Weiteren können Trägerplatten mit flammhemmenden Additive in Form einer thermisch schützenden Schicht versehen werden, um die Erwärmung der Trägerplatte entsprechend zu verzögern. Dafür werden vor allem mineralische Schichten eingesetzt.

Als Brandschutzmittel bei der Herstellung von Holzwerkstoffplatten werden somit regelmäßig Borsäure, Borsalze, Aluminiumhydroxyd, Ammonpolyphosphate sowie Mono- und Diammonphosphat verwendet. Auch Mischungen dieser Stoffe sind bekannt, so wird beispielsweise Aluminiumhydroxyd gemeinsam mit Borsäure bzw. Ammonpolyphosphat verwendet, wodurch synergistische Wirkungen bestehen.

Ein wesentlicher Vorteil bei der Verwendung von Borsäure ist die gute Einsatzmöglichkeit bei den Presstemperaturen in einer kontinuierlichen Presse, die im Bereich von ca. 170 - 180°C liegen, bei einer Kurzkontaktpressen liegt die Presstemperatur im Bereich von ca. 155°C.

Die WO 2018/122406 A1 offenbart für diesen Zweck beispielsweise Additive, die zur brandhemmenden Ausrüstung von Holzwerkstoffen geeignet sind. Die Zusammensetzung umfasst mindestens ein feuerhemmendes Mittel, ausgewählt aus der Gruppe der Ammonium (Poly)phosphate wie Monoammoniumdihydrogenphosphat (MAP), Di-Ammoniumhydrogenphosphat (DAP) Ammoniumpolyphosphat, Melaminphosphat oder Melaminpolyphosphat; Ammoniumsulfat; Ammoniumchlorid; Ammoniumsulfamat; Guanidin Phosphat; Guanidinhydrogenphosphat; Guanidinsulfamat; Guanidin Carbonat; Methylenharnstoff, Harnstoffphosphat und Erdalkaliphosphate oder eine beliebige Mischung davon.

Nachteilig an den genannten Herstellungsweisen sind die hohen Beigabemengen von holzfremden Chemikalien zum Trägerplattenwerkstoff. Damit ist eine erschwerte Herstellung der solcherart ausgerüsteten Holzwerkstoffe und mitunter auch eine schlechte Verarbeitbarkeit, beispielsweise durch eine Verringerung der Werkzeugstandzeiten, solcher Plattenmaterialien verbunden. Probleme bereitet auch das Recycling, insbesondere die thermische Verwertung von Holzwerkstoffen, die über ihren gesamten Querschnitt mit einem brandhemmenden Additiv ausgerüstet sind.

Eine andere Alternative stellt die Beschichtung von Holzwerkstoffen mit Vliesen aus einem anorganischen Material dar, das mit einem Brandschutzadditiv ausgerüstet ist und aus der DE 10 2009 004 970 A1 bekannt ist. Das darin offenbarte Vlies besteht aus Mineral- und keramischen Fasern, insbesondere aus verschiedenen Glassorten.

Problematisch am Einsatz von Vliesen aus anorganischen Materialien ist deren schwierige Manipulation während der Herstellung von Laminaten, da diese nicht ausreichend luftdicht sind und nicht mit üblichen Vakuumsaugern angehoben werden können. Außerdem kommt es bei Vliesen dieser Art in deren unbeschichtetem Ausgangszustand leicht zur Ablösung von Fasern, was zu ungewünschten Verschmutzungen führt und insbesondere beim Einatmen gesundheitsschädlich sein kann. Darüber hinaus sind Vliese aus anorganischen Materialien regelmäßig vergleichsweise teuer in ihrer Herstellung.

Daher liegt der vorliegenden Erfindung das technische Problem zugrunde, die eingangs genannten Imprägnate und Laminate und die daraus hergestellten Platten in Bezug auf einen Brandschutz zu verbessern und eine einfachere Herstellung anzugeben.

Das zuvor aufgeführte technische Problem wird erfindungsgemäß durch ein Imprägnat für die Verwendung in einem Laminat mit einer Schicht aus einem zellulosebasierten Material und mit mindestens einer Imprägnierung mit einem Kunstharz dadurch gelöst, dass mindestens eine Imprägnierung ein flammhemmendes Additiv aufweist.

Erfindungsgemäß ist somit das Imprägnat aus einem zellulosebasierten Material, das selbst organischen Ursprungs und somit brennbar ist, mit dem flammhemmenden Additiv so effizient behandelt, dass das Imprägnat einen Brandschutz an sich und gegebenenfalls des damit beschichteten Trägermaterials bewirkt.

Als flammhemmendes Additiv kommen sämtliche zuvor genannten Additive in Frage. Dieses sind Borsäure, Borsalze, Phosphatsalze, Ammonpolyphosphate sowie Mono- und Diammonphosphat, Aluminiumhydroxid oder Phosphor-Stickstoff-Verbindungen. Ebenso sind Mischungen dieser Stoffe bekannt, beispielsweise Aluminiumhydroxyd gemeinsam mit Borsäure bzw. Ammonpolyphosphat.

In bevorzugter Weise ist das flammhemmende Additiv als ein intumeszenzbasiertes Flammschutzmittel ausgebildet und weist insbesondere eine Mischung aus einer Kohlenstoffquelle, einem Katalysator und einem Treibmittel auf. Intumeszenz bezeichnet dabei allgemein die Eigenschaft eines Stoffes, bei einer Temperaturerhöhung ein Ausdehnen oder ein Anschwellen zu erfahren. Intumeszenz ist also eine Volumenzunahme eines festen Körpers ohne chemische Umwandlung bei Anwendung von Wärmeenergie. Die dämmschichtbildenden intumeszenzbasierten Additive schäumen bei Temperaturen von ca. 120 - 300°C auf, wobei sich die Schichtdicke auf das 30 bis 40fache der ursprünglichen Schichtdicke vergrößern kann. Die aufgeschäumten intumeszenzbasierten Additive sind hitzebeständig und verlangsamen oder verhindern den Durchtritt von Wärmeenergie durch die Schicht hindurch.

Unter Intumeszenzmittel werden insbesondere solche Stoffe verstanden werden, die bis zu einer vorgegebenen Temperatur, beispielsweise von 150°C, nicht schäumen, aber bei höheren Temperaturen, vorzugsweise über 180°C, Blasen bilden, aufschäumen und einen vielzelligen flammhemmenden stabilen Schaum erzeugen.

Intumeszenzmittel bestehen im allgemeinen aus einem sogenannten Karbonific, also einer Kohlenstoffquelle, einem Katalysator, insbesondere als Borsäure- oder vorzugsweise Phosphorsäurequelle, und einem Treibmittel als Quelle nicht entflammbarer Gase.

Als Karbonific können allgemein solche Stoffe verwendet werden, die in der Lage sind, das Kohlenstoffgerüst für den wärmedämmenden Schaum bereitzustellen, also z.B.

Kohlenhydrate oder mehrwertige Alkohole wie Zucker, Stärke, Kasein, Pentaerythrit, Di- und Tripentaerythrit. Ein wirksames Karbonific kann beispielsweise eine große Anzahl mit Bor-oder Phosphorsäure veresterungsfähiger Gruppen, vorzugsweise Hydroxylgruppen, und einen hohen Gehalt an Kohlenstoffatomen besitzen.

Der Katalysator zersetzt sich möglichst bei einer Temperatur, die unter der Zersetzungstemperatur des Karbonific liegt, und bildet möglichst viel Säure, insbesondere Bor- oder Phosphorsäure, wozu sich beispielsweise Ammoniumorthophosphat eignet.

Das Treibmittel setzt ein nicht entflammbares Gas frei, wobei es zum Aufschäumen und damit zur Bildung einer isolierenden Schicht kommt. Die Zersetzung des Treibmittels sollte gleichzeitig mit der Zersetzung des aus dem Karbonific und aus dem Katalysator freigesetzten Mittel, insbesondere aus Bor- bzw. Phosphorsäure entstandenen Bor- bzw. Phosphorsäureesters, eintreten. Beispiele für bevorzugte Treibmittel sind Guanylharnstoff, Dicyandiamid, Dicyandiamidin, Allophanat, Biuret, Melamin und Harnstoff.

Die Wirkung von Intumeszenzadditiven im Brandfall kann folgendermaßen an einem Beispiel beschrieben werden. Sobald die Zersetzungstemperatur des Katalysators erreicht ist, wird beispielsweise Bor- oder Phosphorsäure freigesetzt, die sich zum Teil dann mit dem Karbonific zu einem Bor- bzw. Phosphorsäureester umsetzt. Bei weiterem Temperaturanstieg setzt die Zersetzung dieser Bor- bzw. Phosphorsäureester bei einer Temperatur ein, die gewöhnlich unterhalb der Zersetzungstemperatur des unveresterten Karbonific liegt. Die Zersetzungsprodukte bestehen im Wesentlichen aus Kohlenstoff, Wasser, Kohlenoxiden und Bor- oder Phosphorsäure, die wiederum mit unverestertem Karbonific reagieren kann.

Gleichzeitig mit der Zersetzung des Bor- oder Phosphorsäureesters beginnt sich das Treibmittel zu zersetzen und nicht entflammbare Gase werden erzeugt, die den kohlenstoffhaltigen Rückstand des Bor- bzw. Phosphorsäureesters blähen und schäumen, so dass sich eine isolierende Schicht bildet. Durch Verwendung von mindestens zwei verschiedenen Treibmitteln mit unterschiedlichen Zersetzungstemperaturen lässt sich die Gasentwicklung verlängern, so dass größere Schaummengen erzeugt werden können.

Bei einer Hitzeeinwirkung auf das Imprägnat innerhalb einer Platte oder eines Laminats schmelzen die Intumeszenzmittel des Additivs unter Gasentwicklung auf und beginnen nach Erreichen einer ausreichend niedrigen Viskosität sich zu einem karbonisierten, d.h. sehr kohlenstoffreichen, relativ flammwidrigen Schaumsystem zu verändern. Dieser Schaum brennt nur langsam ab und schützt durch seine isolierende Wirkung den Untergrund.

Zusammengefasst führt das Intumeszenz-Verhalten dazu, dass sich das Volumen der aus dem Imprägnat hervorgegangenen Schicht im Falle eines Brandes stark vergrößert und dadurch eine die Wärmeenergie abhaltende Wirkung erzeugt wird. Mit anderen Worten bewirken Intumeszenzadditive, dass diese sich bei erhöhter Temperatur aufblähen und so einen hochwärmedämmenden Schaum ausbilden, der die Temperaturbelastung der darunterliegenden Schicht wesentlich reduziert. Dieses gilt insbesondere bei einem Schichtstoff ebenso wie bei der erläuterten Anwendung als Bestandteil der Beschichtung einer Trägerplatte.

In weiter bevorzugter Weise ist das flammhemmende Additiv in Form von Partikeln eines Feststoffes in der Kunstharzmatrix enthalten. Durch den Einsatz in Form von Partikeln wird die Verarbeitbarkeit verbessert. Dabei weisen die Partikel im Mittel eine Korngröße von 1 bis 500 µm, bevorzugt von 5 bis 250 µm, besonders bevorzugt von 10 bis 100 µm auf.

Des Weiteren ist es bevorzugt, dass das flammhemmende Additiv in einer Menge von 1 bis 250 g/m², bevorzugt in einer Menge von 25 bis 200 g/m², besonders bevorzugt in einer Menge von 50 bis 150 g/m² vorliegt. Die angegebenen Flächenmassen haben sich als besonders geeignet für einen guten Flammenschutz herausgestellt.

Des Weiteren können als Kunstharze ein Melamin-Formaldehydharz, ein Harnstoff-Formaldehydharz oder ein Phenol-Formaldehydharz oder Mischungen davon eingesetzt werden.

Als zellulosefaserbasiertes Material wird insbesondere ein Papier eingesetzt, insbesondere ein Natron-Kraft-Papier, ein Dekorpapier oder ein Overlaypapier.

Des Weiteren ist es bevorzugt, dass der Anteil des Kunstharzes und des flammhemmenden Additivs im getrockneten Zustand, einen Anteil von 50 % bis 500 %, bevorzugt von 150 % bis 400 %, besonders bevorzugt von 250 % bis 350 %, bezogen auf die Masse des trockenen, unbeharzten zellulosebasierten Materials beträgt. Bei den genannten Verhältnissen hat sich herausgestellt, dass die flammhemmenden Eigenschaften des Laminats besonders gut ausgebildet sind.

Schließlich kann das flammhemmende Additiv einseitig oder doppelseitig auf die Schicht aufgebracht sein. Dadurch wird eine besonders gleichmäßige Durchdringung des zellulosehaltigen Materials erreicht.

Das oben aufgezeigte technische Problem wird auch durch ein Laminat, insbesondere in Form eines Schichtstoffes oder einer beschichteten Trägerplatte, mit mindestens einem harzimprägnierten Imprägnat der zuvor beschriebenen Art mit einem flammhemmenden Additiv, vorzugsweise in Form eines intumeszenzbasierten Flammschutzmittel und mit mindestens einer weiteren Schicht aus einem Papier oder einer Trägerplatte. Das Papier der weiteren Schicht kann dabei ein Natron-Kraft-Papier, ein Dekorpapier oder ein Overlaypapier sein. Die Trägerplatte der weiteren Schicht kann eine beschichtete Holzwerkstoff- oder Kunststoffplatte sein. Das Laminat ist somit vorbereitet, um gegebenenfalls in einem Schichtaufbau mit einer gegebenenfalls weiteren Platte oder als solches weiter verarbeitet zu werden.

Das Laminat kann auch eine Vielzahl, beispielsweise 20, 50 oder 100 weitere Schichten aus einem Papier aufweisen, so dass eine Kompaktplatte entsteht, die als Plattenmaterial eingesetzt werden kann.

Das oben aufgezeigte technische Problem wird erfindungsgemäß auch durch eine Platte mit einer Trägerplatte und mit mindestens einem mit der Trägerplatte verbundenen und ein flammhemmendes Additiv aufweisenden Imprägnat gelöst.

Somit wird die erfindungsgemäße flammhemmende Wirkung des Imprägnats in der vorgeschlagenen Platte verwirklicht, wobei der Schichtaufbau der Platte unterschiedlich in den Bestandteilen und der Schichtung ausgestaltet sein kann. Als flammhemmendes Additiv können die oben genannten Materialien, insbesondere ein intumeszenzbasiertes Flammschutzmittel vorhanden sein.

Mit Hilfe der mit flammhemmenden Additiven ausgerüsteten zellulosebasierten Materialien, insbesondere Papierschichten, können die Trägerplatten unabhängig von ihrer sonstigen Beschaffenheit brandgeschützt ausgestaltet werden. Die Papiere werden dabei beispielsweise als Underlay-Papiere verarbeitet, indem diese als eine separate Lage zwischen einer Trägerplatte, insbesondere einer Holzwerkstoff- oder Kunststoffplatte und dem Dekorpapier mit verpresst werden.

Alternativ kann aber auch ein ein flammhemmendes Additiv aufweisendes Imprägnat selbst als Dekorschicht ausgebildet sein. Ebenso sinnvoll kann es aber auch sein, sowohl ein oder mehrere Underlays und ein Dekorpapier jeweils als ein ein flammhemmendes Additiv aufweisendes Imprägnat auf einer Trägerplatte vorzusehen. Somit lassen sich die flammhemmenden Eigenschaften des fertigen Bauteils weiter verbessern, zumal damit eine erhöhte Menge an flammhemmendem Additiv je Flächeneinheit bereitgestellt werden kann.

Ein Aufbau, bei dem neben einem Underlay auch die Dekorschicht aus einem, ein flammhemmendes Additiv aufweisenden Imprägnat bereitgestellt wird, kann auch bei der Herstellung eines Schichtstoffes oder einer Kompaktplatte sinnvoll sein. Darüber hinaus ist es auch bevorzugt, bei Aufbauten, die ein Overlay, ein Dekorpapier und optional auch ein Underlay aufweisen, nicht nur eine dieser Schichten, sondern auch mehrere oder alle dieser Schichten aus einem ein flammhemmendes Additiv aufweisenden Imprägnat bereitzustellen. Weisen solche Aufbauten mehrere Lagen eines Kernpapiers oder Underlay auf, kann es auch bevorzugt sein, eine, mehrere oder alle dieser Schichten aus einem ein flammhemmendes Additiv aufweisenden Imprägnat bereitzustellen.

Insbesondere bei Platten für den Möbel- und Innenausbau, bei Paneelen für die Wand- und Deckenbekleidung sowie auch für Kompaktplatten die zur Verkleidung von Fassaden vorgesehen sind, wird es bevorzugt sein, an beiden Seiten dieser Platten in oberflächennahen Schichten zumindest ein ein flammhemmendes Additiv aufweisendes Imprägnat vorzusehen. Es wird das generell immer dann sinnvoll sein, wenn eine mögliche Brandbelastung nicht zwingend nur auf eine der beiden Seiten der Platte einwirken kann. Zusätzlich kann damit aber auch die Auswirkung einer in falscher Ausrichtung montierten Platte verhindert werden, zumal bei beidseitiger Anordnung zumindest eines ein flammhemmendes Additiv aufweisenden Imprägnats es unerheblich ist, welche Seite einer Platte einer Brandlast ausgesetzt ist.

Durch Einbringen mindestens eines flammhemmend ausgebildeten Imprägnats in den Schichtaufbau einer Platte kann ein wirkungsvoller Brandschutz erreicht werden, ohne dass die Trägerplatte selbst flammhemmend behandelt sein muss. Allein das mindestens eine entsprechend imprägnierte Imprägnat bewirkt den gewünschten Brandschutz.

In bevorzugter Weise ist die Trägerplatte eine MDF-Platte, eine HDF-Platte, eine Spanplatte, eine OSB-Platte, eine OSB-MDF Verbundplatte, eine Holzwerkstoffverbundplatte, eine Tischlerplatte, eine Sperrholzplatte, eine Leichtbauplatte oder eine Wabenplatte. Des Weiteren kann die Trägerplatte auch eine kunststoffbasierten Platte oder eine Holz-Kunststoff basierte Platte sein.

Daraus ergeben sich vielfältige Anwendungen und Kombinationen, in denen das beschriebene Imprägnat oder ein bereits zu einem Schichtstoff bzw. zu einem Laminat verarbeitetes Imprägnat eingesetzt werden kann.

Das oben aufgezeigte technische Problem wird auch durch ein Verfahren zur Herstellung eines Imprägnats gelöst, bei dem eine Schicht aus einem zellulosebasierten Material bereitgestellt wird und bei dem die Schicht mit einem flammhemmenden Additiv versehen wird.

Damit wird erfindungsgemäß die selbst aus brennbarem Material bestehende Schicht des Imprägnats mit dem flammhemmenden Additiv versehen, so dass gerade bei Imprägnaten, Schichtstoffen, Laminaten oder Platten keine zusätzliche nichtbrennbare Schicht wie beispielsweise auf Basis eines Glasfaservlies eingebaut werden muss.

Als flammhemmende Additive können alle oben genannten Additive eingesetzt werden. In bevorzugter Weise ist das flammhemmende Additiv ein intumeszenzbasiertes Flammschutzmittel, das insbesondere eine Mischung aus einer Kohlenstoffquelle, einem Katalysator und einem Treibmittel aufweist. Die entsprechenden Eigenschaften und Vorteile sind oben bereits erläutert worden. Damit wird mittels des beschriebenen Verfahrens ein Imprägnat hergestellt, das die Vorteile des intumeszbasierten Materials in Verbindung mit einer zellulosebasierten Schicht realisiert.

In vorteilhafter Weise wird das flammhemmende Additiv in Form von Partikeln eines Feststoffes bereitgestellt, wobei weiter vorzugsweise die Partikel im Mittel eine Korngröße von 1 bis 500 µm, bevorzugt von 5 bis 250 µm, besonders bevorzugt von 10 bis 100 µm aufweisen. Diese Korngrößen haben sich im Zusammenhang mit dem zellulosebasierten Material als besonders vorteilhaft herausgestellt. Insbesondere sind derartige Feststoffe leicht zu handhaben und zu verarbeiten.

Weiterhin kann das zellulosefaserbasierte Material aus einem Papier, insbesondere einem Underlaypapier oder Kernpapier in Form eines Natron-Kraft-Papier, einem Dekorpapier oder einem Overlaypapier bestehen oder ein solches aufweisen. Damit werden die genannten Papiere selbst für einen Brandschutz einsetzbar.

Für die Herstellung des Imprägnats gibt es verschiedene Möglichkeiten, wann und wie das flammhemmende Additiv der Schicht aus einem zellulosebasierten Material hinzugefügt wird.

In bevorzugter Weise wird das flammhemmende Additiv in ein Imprägnierharz eingebracht, insbesondere dispergiert. Das zellulosefaserbasierte Material wird dann mit dem mit einem flammhemmenden Additiv versehenen Imprägnierharz benetzt und das benetzte zellulosefaserbasierte Material wird anschließend getrocknet.

Somit wird das flammhemmende Additiv vor dem Auftragen auf dem zellulosebasierten Material mit dem Imprägnierharz vermischt und erst in dem vermischten Zustand wird das Imprägnierharz auf das zellulosebasierte Material aufgebracht.

Dabei kann das Kunstharz ein Melamin-Formaldehydharz, ein Harnstoff-Formaldehydharz oder ein Phenol-Formaldehydharz oder Mischungen davon enthalten. Darüber hinaus werden gängige Auftragsverfahren wie die Benetzung mittels Tauchen, mittels eines Aufdüsens oder eines Aufgießens oder mittels einer Rasterwalze eingesetzt.

In bevorzugter Weise wird das flammhemmende Additiv in einer Menge von 10 bis 80%, bevorzugt von 25 bis 70 %, besonders bevorzugt von 40 bis 60 %, bezogen auf den Feststoffgehalt des Imprägnierharzes, eingebracht. Diese Auftragsmengen haben sich als besonders vorteilhaft erwiesen.

Das Verfahren kann insbesondere so durchgeführt werden, dass das zellulosebasierte Material im trockenen Zustand mit dem mit einem flammhemmenden Additiv versehenen Imprägnierharz benetzt wird. Somit kommt die Dispersion mit dem unvorbehandelten Material in Berührung und kann effektiv in die Faserstruktur eindringen.

Alternativ dazu kann das zellulosebasierte Material nach einer ersten Vorimprägnierung mit einem Imprägnierharz im noch nassen Zustand mit dem mit einem flammhemmenden Additiv versehenen Imprägnierharz benetzt werden. Durch den bereits nassen Zustand kann die Dispersion besonders gut in der Fläche verteilt werden und die Partikel werden auf der Oberfläche des Materials gut verteilt.

Als bevorzugte Ausgestaltung des Verfahrens erfolgt ein Zwischenschritt, indem zunächst das zellulosebasierte Material mit einer ersten Vorimprägnierung versehen und erst getrocknet wird, bevor das zellulosebasierte Material mit dem mit einem flammhemmenden Additiv versehenen Imprägnierharz benetzt wird. Durch die Vortrocknung wird eine nochmals bessere Verteilung der Dispersion auf dem Material erreicht.

Die zuvor beschriebenen Verfahren werden vorzugsweise so durchgeführt, dass die Benetzung mit dem mit einem flammhemmenden Additiv versehenen Imprägnierharz beidseitig erfolgt. Somit wird eine bessere Beladung des zellulosebasierten Materials mit dem flammhemmenden Additiv erreicht, denn das Additiv kann von beiden Seiten in die Faserstruktur eindringen und/oder beidseitig darauf verteilt werden.

Eine weitere bevorzugte Ausgestaltung des Verfahrens zur Herstellung eines Imprägnats besteht darin, dass das flammhemmende Additiv in Form von Partikeln eines Feststoffs auf das zellulosefaserbasierte Material aufgestreut wird. Durch das Aufstreuen wird eine sehr regelmäßige Verteilung des flammhemmenden Additivs erreicht, es kann aber auch gezielt von einer gleichmäßigen Verteilung abgewichen werden, um Zonen mit zusätzlich erhöhtem Brandwiderstand zu erhalten, was bei der Verwendung einer Dispersion nicht möglich wäre.

Die Partikel werden beim Aufstreuen vorzugsweise in einer Menge von 20 bis 240 g/m², bevorzugt in einer Menge von 40 bis 160 g/m², besonders bevorzugt in einer Menge von 60 bis 120 g/m² auf das zellulosefaserbasierte Material aufgestreut. Diese Auftragsmengen haben sich als besonders vorteilhaft herausgestellt.

Eine erste Alternative beim Aufstreuen der Partikel besteht darin, dass das zellulosebasierte Material nach einer Imprägnierung mit einem Imprägnierharz im noch nassen Zustand mit dem flammhemmenden Additiv in Form von Partikeln eines Feststoffs bestreut wird und dass das benetzte zellulosefaserbasierte Material anschließend getrocknet wird. Somit wird zunächst eine herkömmliche Vorimprägnierung vorgenommen, auf die dann die Partikel aufgestreut werden. Die Partikel liegen dann auf der Oberfläche auf und sinken dann gegebenenfalls in das Imprägnierharz ein. Bevorzugt verbleibt ein Teil der Partikel auch an der Oberfläche und kann in direkten Kontakt mit anderen Schichten gebracht werden, wenn eine Verarbeitung zu einem Schichtstoff, einem Laminat, einer Kompaktplatte oder einer beschichteten Platte erfolgt.

Eine zweite Alternative besteht darin, dass das zellulosebasierte Material mit einem Imprägnierharz imprägniert wird, dass ein erster Trockenschritt durchgeführt wird und dass anschließend das zellulosebasierte Material mit einem Imprägnierharz benetzt wird und dass das zellulosebasierte Material im noch nassen Zustand mit dem flammhemmenden Additiv in Form von Partikeln eines Feststoffs bestreut wird. Somit wird zunächst eine herkömmliche Vorimprägnierung erzeugt, deren Imprägnierharz zumindest vorgetrocknet wird. Anschließend wird eine weitere Imprägnierharzschicht aufgebracht und, solange diese noch nicht angetrocknet ist und noch nass ist, werden die Partikel aufgestreut. Dadurch wird eine sehr gleichmäßige Verteilung der Partikel erreicht, da das zellulosebasierte Material zunächst durch die Vorimprägnierung zumindest teilweise versiegelt wird, bevor die weitere Schicht aus Imprägnierharz aufgebracht wird.

Bei einer weiteren Alternative wird ein Verfahren durchgeführt, bei dem das flammhemmende Additiv in ein Imprägnierharz eingebracht, insbesondere dispergiert wird, bei dem das zellulosefaserbasierte Material mit dem mit einem flammhemmenden Additiv versehenen Imprägnierharz benetzt wird, bei dem ein flammhemmendes Additiv in Form von Partikeln eines Feststoffes bereitgestellt wird, bei dem das flammhemmende Additiv in Form von Partikeln eines Feststoffs auf das zellulosefaserbasierte Material aufgestreut wird und bei dem das benetzte zellulosefaserbasierte Material getrocknet wird.

Somit werden die Partikel zweifach auf das zellulosebasierte Material aufgebracht. Einerseits in Form der Dispersion und andererseits durch Streuen der Partikel auf die noch nasse Dispersion. Die nasse Dispersion kann alternativ auch vor dem Aufstreuen bereits zumindest teilweise angetrocknet sein.

Das oben aufgezeigte technische Problem wird erfindungsgemäß auch durch ein Verfahren zur Herstellung eines oben beschriebenen Laminats gelöst, bei dem ein ebenfalls oben beschriebenes Imprägnat mit zumindest einer weiteren Schicht mittels einer Taktpresse, einer Mehretagenpresse oder einer Doppelbandpresse verpresst wird. Somit wird das Imprägnat zu einem Laminat weiter verarbeitet, dass mindestens eine Schicht mit einem flammhemmenden Additiv, insbesondere einem intumeszenten Flammschutzmittel versehen ist.

Das oben aufgezeigte technische Problem wird auch durch ein Verfahren zur Herstellung einer Platte gelöst, bei dem eine Trägerplatte bereitgestellt wird, bei dem mindestens ein ein flammhemmendes Additiv aufweisendes Imprägnat bereitgestellt wird, bei dem eine Dekorschicht bereitgestellt wird und bei dem die Trägerplatte, das mindestens eine Imprägnat und die Dekorschicht unter Anwendung von Druck und Wärmeenergie verpresst werden.

Des Weiteren kann mindestens ein ein flammhemmendes Additiv aufweisendes Imprägnat zwischen der Trägerplatte und der Dekorschicht angeordnet werden.

Zudem kann die Dekorschicht selbst als ein ein flammhemmendes Additiv aufweisendes Imprägnat ausgebildet sein, womit dann auf ein separates Imprägnat verzichtet werden kann. In diesem Fall ist die Dekorschicht dann direkt auf der Trägerplatte angeordnet (DPL - Direkt Pressed Laminate).

Alternativ oder zusätzlich kann vorzugsweise mindestens ein ein flammhemmendes Additiv aufweisendes Imprägnat auf der von der Dekorschicht abgewandten Seite der Trägerplatte angeordnet werden. Eine solche Ausgestaltung ist vorteilhaft, wenn die Platte in einer Lage montiert wird, bei der die Möglichkeit des Auftretens einer Brandlast von der dem Betrachter abgewandten Seite besteht, wie das beispielsweise bei einem Zwischenboden der Fall sein kann.

Des Weiteren ist es vorteilhaft, wenn das Imprägnat im Verbund mit einer Dekorschicht als vorverarbeitetes Laminat bzw. Schichtstoff bereitgestellt wird. Somit können ein oder mehrere Imprägnate mit einer Dekorschicht und gegebenenfalls einer Overlayschicht als Vorprodukt zur Verfügung gestellt werden.

Die Platte kann in verschiedener Weise und für unterschiedliche Zwecke ausgebildet sein, vorzugsweise ist die Platte ein Fußbodenpaneel, ein Wandpaneel, ein Deckenpaneel oder eine Möbelplatte. Darüber hinaus kann sie in Form einer Kompaktplatte beispielsweise auch als Platte für den Möbelbau oder als Fassadenverkleidung eingesetzt werden.

Die beschriebenen flammhemmenden Imprägnate können in verschiedener Weise verpresst werden, insbesondere mittels Direktbeschichtungsprozessen mit Kurztakt- oder Doppelbandpressen, mittels Direktbeschichtung während oder bei der Trägerplattenherstellung (Eingangverfahren), mittels Mehretagen oder Kurztaktpressen bei der Kompaktplattenherstellung und insbesondere bei der Schichtstoffherstellung, mittels Ein- oder Mehretagenpressen (High Pressure Laminate HPL) oder Doppelbandpressen (Continuous Preasure Laminate CPL) oder mittels einer Taktpresse.

Derart flammhemmend ausgebildete und somit brandvergütete Trägerplatten, insbesondere Holzwerkstoffplatten und Kompaktplatten können in weiterer Folge auch zu Verbundelementen wie z.B. Wabenplatten oder Holzwerkstoffverbundplatten veredelt werden.

Im Folgenden wird die Erfindung anhand von Ausführungsbeispielen mit Bezug auf die Zeichnung erläutert. In der Zeichnung zeigen
- Fig. 1: einen Schichtaufbau einer zu produzierenden Platte mit einem erfindungsgemäßen Imprägnat in einer Explosionsansicht,
- Fig. 2: den Schichtaufbau einer verpressten Platte mit dem Schichtaufbau nach Fig. 1,
- Fig. 3: die in Fig. 2 gezeigt Platte nach der Einwirkung von starker Wärmestrahlung,
- Fig. 4: eine schematische Darstellung einer Anlage zur Durchführung eines ersten erfindungsgemäßen Verfahrens zur Herstellung eines Imprägnats und
- Fig. 5: eine schematische Darstellung einer Anlage zur Durchführung eines zweiten erfindungsgemäßen Verfahrens zur Herstellung eines Imprägnats.

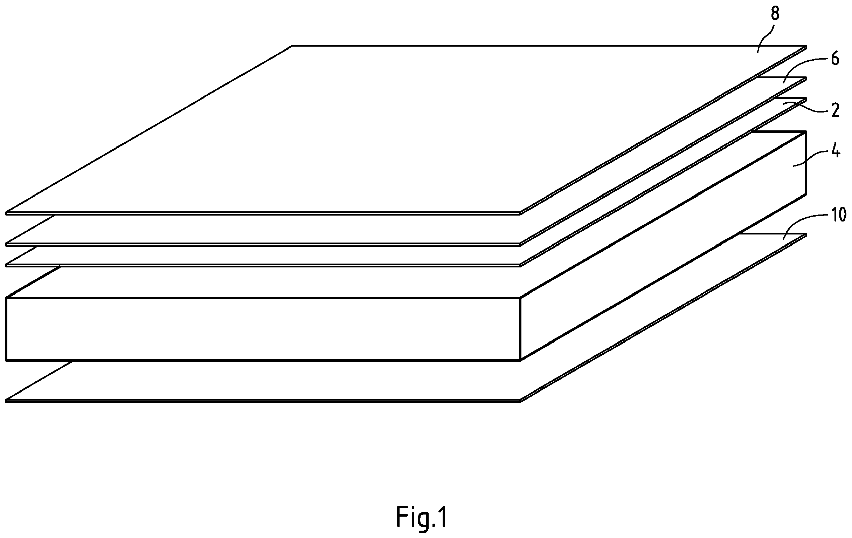

Fig. 1 zeigt ein Imprägnat 2 als Teil eines Schichtaufbaus, wobei das Imprägnat 2 aus einem Kraftpapier, also einem zellulosebasierten Material besteht. Das Kraftpapier wurde während einer Imprägnierung zum Teil mit einem Kunstharz imprägniert, das ein flammhemmendes Additiv aufweist. Das Additiv ist ein intumeszenzbasiertes Flammschutzmittel, das sich bei Einwirkung von hoher Temperatur aufgrund einer Schaumbildung ausdehnen und eine Schutzschicht bilden kann.

Der Aufbau nach Fig. 1 zeigt weiterhin eine Trägerplatte 4 aus einem Holzwerkstoff, vorliegend aus einer hochdichten Faserplatte (HDF), sowie eine Dekorschicht 6, oberhalb derer eine Overlayschicht 8 angeordnet ist. Unterhalb der Trägerplatte 4 ist schließlich noch eine Gegenzugschicht 10 zum Ausgleich von Spannungen innerhalb des Schichtaufbaus bei thermisch bedingten Änderungen innerhalb des Schichtsaufbaus.

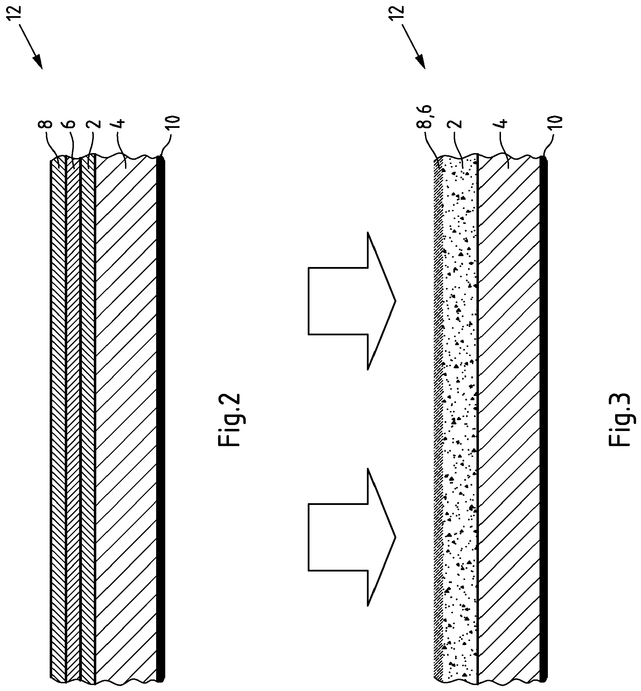

Fig. 2 zeigt die verpresste Platte 12, die aus den in Fig. 1 gezeigten Bestandteilen besteht, in einem gebrauchsfertigen Zustand in einer teilweisen Seitenansicht. Die einzelnen übereinander gestapelten Schichten 2 bis 10 sind durch horizontale Streifen dargestellt.

Fig. 3 zeigt dieselbe Platte nach Fig. 2, nachdem eine starke Wärmestrahlung auf die Platte eingewirkt hat. Die Wärmestrahlung ist in Form von zwei breiten vertikal nach unten gerichteten Pfeilen dargestellt.

Die Wärmestrahlung hat den Schichtaufbau erhitzt, so dass sich das im Imprägnat 2 enthaltene intumeszenzbasierte Additiv aufgebläht hat, wodurch sich das Volumen des Imprägnats 2 deutlich vergrößert hat. Durch die Formänderung haben sich die Dekorschicht 6 und die Overlayschicht 8 in Einzelteile zerlegt und liegen oberhalb des aufgeschäumten Imprägnats 2.

Durch die starke Volumenänderung des Imprägnats 2 werden die darunter liegenden Schichten der Trägerplatte 4 und der Gegenzugschicht 10 vor einer Temperatureinwirkung der Wärmestrahlung zumindest teilweise geschützt, wodurch der gewünschte Brandschutzeffekt erreicht wird.

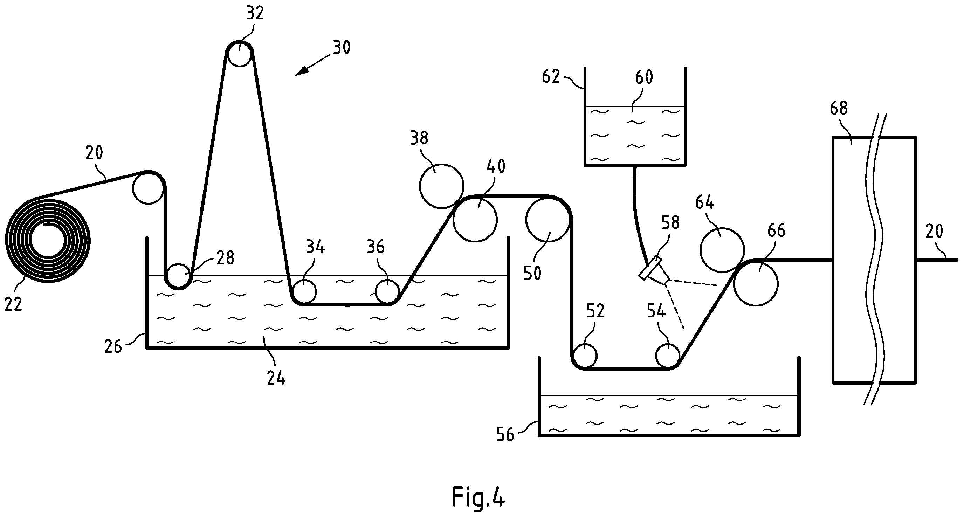

In Fig. 4 ist eine schematische Darstellung einer Anlage zur Durchführung eines Verfahrens für die Herstellung eines für die Verwendung als Kernschicht vorgesehenen, erfindungsgemäßen Imprägnats auf Basis eines Natron-Kraft-Papiers dargestellt.

Grundsätzlich wird ein Natron-Kraft-Papier mit einem unbeharzten Flächengewicht von 120 g/m² mit einem intumeszierenden flammhemmenden Additiv, eingebracht als Pulver in eine Imprägnierharzflotte beschichtet.

Das Pulver weist eine Korngröße im Bereich < 50µm auf (zumindest 85 Masse% weisen eine Korngröße < 50µm, bevorzugt zumindest 90%, besonders bevorzugt zumindest 95%). Möglich sind auch Kraftpapiere mit einem Flächengewicht von 40 bis 80 g/m² oder auch zwischen 20 und 280 g/m².

Als Imprägnierharz wird Melamin-Formaldehydharz (MF-Harz) eingesetzt. Ebenso können auch andere Harze wie Harnstoff-Formaldehydharze (UF-Harz) oder Phenolformaldehydharze (PF-Harz) oder Mischungen dieser Harze als MUF- oder MUPF-Harze eingesetzt werden.

Das flammhemmende Additiv wird als Brandschutzmittel mit einem Anteil von 45 % bezogen auf den Festharzgehalt des Imprägnierharzes eingebracht.

Wie Fig. 4 zeigt, wird das Natron-Kraft-Papier 20 von einer Rolle 22 abgerollt und in einem ersten Schritt zunächst kernimprägniert. Dies erfolgt mit einem nicht ausgerüsteten Imprägnierharz 24, das in einer Wanne 26 vorliegt. Es handelt sich dabei um das gleiche Imprägnierharz, wie später mit Zusatz von flammhemmenden Additiven verwendet wird. Die Kernimprägnierung des Papiers 20 geschieht durch eine Führung entlang eines halben Umfangs einer Walze 28 des Imprägnierwerkes, die ungefähr zur Hälfte in die Wanne 26 mit flüssigem Imprägnierharz 24 eintaucht. Anschließend penetriert das Harz entlang der sogenannten Atemstrecke 30 von der einen Seite zur anderen Seite des Papiers, um Lufteinschlüsse zu verhindern, also eine vollständige Kernimprägnierung zu erreichen. Die Atemstrecke 30 wird durch eine Umlenkwalze 32 gebildet, so dass das imprägnierte Papier 20 über eine vorgegebenen Strecke erst nach oben und dann wieder nach unten geführt wird.

Nach der Atemstrecke 30 wird die Papierbahn 20 nochmals mittels zweier Walzen 34 und 36 durch die Wanne 26 geführt, erneut mit dem Imprägnierharz 24 beaufschlagt und anschließend in einem definierten Walzenspalt zweier Walzen 38 und 40 überschüssiges Harz abgestreift, so dass sich eine Flächenmasse aus Papiergewicht und verbleibender Harzmenge von 190 g/m² einstellt, gemessen nach der Trocknung, also einschließlich einer Restfeuchte von ca. 6,5% gemessen nach Lagerung bei 120°C für 10 Minuten.

Nachdem die Kernimprägnierung abgeschlossen worden ist, führen nach dem Walzenspalt der beiden Walzen 38 und 40 weitere Walzen 50, 52 und 54 die nasse Papierbahn oberhalb einer Auffangwanne 56 einer Düse 58 zu. Die Düse 58 dient einer einseitigen Bedüsung der Papierbahn 20 mit dem mit flammhemmenden Additiven ausgerüsteten Imprägnierharz 60, das aus einem Tank 62 zugeführt wird.

Das aufgedüste Imprägnierharz 60 wird ebenfalls mittels eines Walzenspalts zweier Walzen 64 und 66 dosiert, so dass nach dem Trocknen in einer Trockenstrecke 68 der imprägnierten Papierbahn 20 ein Flächengewicht von 400 g/m² bei einer Restfeuchte von ca. 6,5% vorliegt (Papiergewicht, getrocknetes Imprägnierharz mit Additiv und Restfeuchte).

Somit wird eine Auftragsmenge des mit flammhemmenden Additiven ausgerüsteten Imprägnierharzes mit einem Flächengewicht von ca. 210 g/m² erreicht. Bei einem Anteil der flammhemmenden Additive von 45% bezogen auf den Festharzgehalt des ausgerüsteten Imprägnierharzes ergibt sich damit eine Menge mit einem Flächengewicht von ca. 89 g/m².

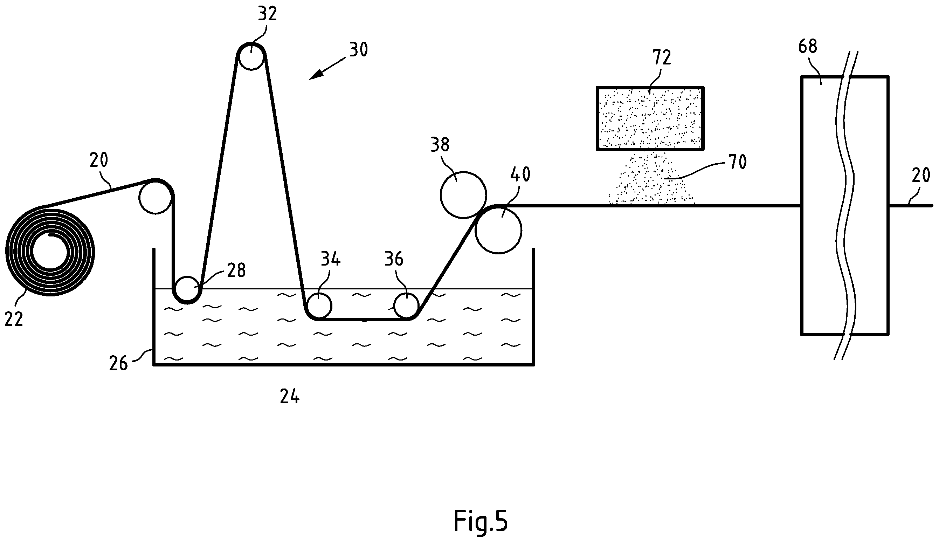

In Fig. 5 ist eine Anlage gezeigt, mit der die Herstellung eines Imprägnats zur Verwendung als Dekorschicht mittels Aufstreuen eines flammhemmenden Additiv als Brandschutzmittel durchgeführt werden kann. Dabei ist der Aufbau aus Vorimprägnierstrecke und Trockenstrecke in gleicher Weise wie in Fig. 4 aufgebaut.

Ein Dekorpapier 20 mit einem Flächengewicht von 65 g/m² wird nach einseitiger Benetzung mit einem Imprägnierharz 24 in der Wanne 26 und einer Atemstrecke 30 nochmals durch die Wanne 26 geführt, wobei das Dekorpapier 20 Kontakt zum Imprägnierharz von beiden Seiten bekommt. Ein nachfolgender Walzenspalt der Walzen 38 und 40 wird so eingestellt, dass ein Flächengewicht des auf eine Restfeuchte von ca. 6,5% getrockneten Imprägnats von 140 g/m² vorliegt.

Nach dem Walzenspalt der Walzen 38 und 40 wird auf die nach oben ausgerichtete Unterseite der nassen Papierbahn 20 das flammhemmende Additiv 70 als Brandschutzmittel mittels eines Aufstreuaggregats 72 aufgestreut, wobei die Menge des Additivs 70 so dosiert wird, dass ein Flächengewicht von 120 g/m² Additive appliziert wird. Anschließend wird die so behandelte Papierbahn 20 durch die Trockenstrecke 68 in Form eines Trocknungskanals geführt und auf eine Restfeuchte von ca. 6,5% getrocknet.

Die Verarbeitung des imprägnierten Dekorpapiers zu einer flammhemmend ausgerüsteten Platte erfolgt nach dem DPL-Verfahren.

Nachfolgend werden zwei Varianten an Platten beschrieben.

Eine Spanplatte weist einen Schichtaufbau wie folgt auf:
- Spanplatte Typ E1 P2, Dicke 12 mm
- 1 Lage Kernpapier als Imprägnat nach vorstehender Beschreibung mit flammhemmenden Additiven.
- 1 Lage Dekorpapier mit einem Flächengewicht von 65 g/m², wobei das Dekorpapier mit MUF-Harz mit einem Beharzungsgrad von 85% imprägniert wird. Das Flächengewicht inklusive Harz und Restfeuchte von ca. 6,5% beträgt 112 g/m².

Der Schichtaufbau wird in einer beheizten Taktpresse bei einem Pressdruck von 40 kg/cm² für eine Presszeit von 50 Sek. verpresst.

Die erhaltene Platte erreicht nach Prüfung gemäß der Norm EN 13 823 (SBI-Test) und Klassifizierung nach der Norm EN 13 501-1 die Klasse B-s2;d0.

Eine Kompaktplatte weist einen Schichtaufbau auf:
- 48 Lagen NK 215 imprägniert mit PF-Harz
- 1 Lage Kernpapier als Imprägnat nach vorstehender Beschreibung mit flammhemmenden Additiven
- 1 Lage Dekorpapier mit einem Flächengewicht von 65 g/m², wobei das Dekorpapier mit MUF-Harz mit einem Beharzungsgrad von 85% imprägniert wird. Das Flächengewicht inklusive Harz und Restfeuchte von ca. 6,5% beträgt 112 g/m²

Der Schichtaufbau wird in einer beheizten Taktpresse bei einem Pressdruck von 54 kg/cm² für eine Presszeit von 250 Sek. verpresst.

Die erhaltene Platte erreicht nach Prüfung gemäß der Norm EN 13 823 (SBI-Test) und Klassifizierung nach der Norm EN 13 501-1 die Klasse B-s2;d0

Im Folgenden werden verschiedene Alternativen von Schichtaufbauten von Fußbodenpaneelen mit erfindungsgemäßen Imprägnaten angegeben. Die jeweils oberste Schicht wird als erstes genannt und in der jeweiligen Reihenfolge folgen dann die weiteren Schichten bis zur untersten Schicht als jeweils Letztes. Des Weiteren stellen das Kraftpapier mit flammhemmenden Additiven jeweils ein Imprägnat und das Dekorpapier eine Dekorschicht dar.
Fußbodenpaneel mit Direct Pressure Laminat 1 (DPL 1)
   - Overlaypapier
   - Dekorpapier
   - Kraftpapier mit flammhemmenden Additiven
   - Hochdichte Faserplatte (HDF)
   - Gegenzugschicht
Fußbodenpaneel mit Direct Pressure Laminat 2 (DPL 2)
   - Overlaypapier
   - Dekorpapier
   - Kraftpapier mit flammhemmenden Additiven
   - Hochdichte Faserplatte (HDF)
   - Kraftpapier mit flammhemmenden Additiven
   - Gegenzugschicht
Korkfußbodenpaneel 1 (Korkschichtboden)
   - Dekorschichten (Decklack, Digitaldruck, Grundlack)
   - Korkschicht
   - Polurenthan (PUR) Klebstofffuge
   - Kraftpapier mit flammhemmenden Additiven
   - Hochdichte Faserplatte (HDF)
   - Polurethan (PUR) Klebstofffuge
   - Korkschicht
Korkfußbodenpaneel 2 (Korkschichtboden)
   - Dekorschichten (Decklack, Digitaldruck, Grundlack)
   - Korkschicht
   - Polurethan (PUR) Klebstofffuge
   - Kraftpapier mit flammhemmenden Additiven
   - Hochdichte Faserplatte (HDF)
   - Kraftpapier mit flammhemmenden Additiven µ Polurethan (PUR) Klebstofffuge
   - Korkschicht
Designfußbodenpaneel 1
   - UV-Decklack
   - Strukturfolie aus Polypropylen (PP) oder thermoplastischem Polyurethan (TPU)
   - TPU Klebstofffuge
   - Dekorpapier
   - Kraftpapier mit flammhemmenden Additiven
   - Hochdichte Faserplatte (HDF)
   - Gegenzugschicht
   - TPU Klebstofffuge
   - Korkschicht (als integrierte Trittschallmatte)
Designfußbodenpaneel 2
   - UV- Decklack
   - PP oder TPU-Struktur Folie
   - TPU Klebstofffuge
   - Dekorpapier
   - Kraftpapier mit flammhemmenden Additiven
   - Hochdichte Faserplatte (HDF)
   - Gegenzugschicht
   - TPU Klebstofffuge
Designfußbodenpaneel 3
   - UV- Decklack
   - PP oder TPU-Struktur Folie
   - TPU Klebstofffuge
   - Dekorpapier
   - Kraftpapier mit flammhemmenden Additiven
   - Hochdichte Faserplatte (HDF)
   - Kraftpapier mit flammhemmenden Additiven
   - Gegenzugschicht
   - TPU Klebstofffuge
   - Korkschicht (als integrierte Trittschallmatte)
Designfußbodenpaneel 4
   - UV- Decklack
   - PP oder TPU-Struktur Folie
   - TPU Klebstofffuge
   - Dekorpapier
   - Kraftpapier mit flammhemmenden Additiven
   - Hochdichte Faserplatte (HDF)
   - Kraftpapier mit flammhemmenden Additiven
   - Gegenzugschicht
   - TPU Klebstofffuge

## Patentansprüche

1. Imprägnat für die Verwendung in einem Laminat,
- mit einer Schicht (2) aus einem zellulosebasierten Material und
- mit mindestens einer Imprägnierung mit einem Kunstharz,
**dadurch gekennzeichnet,**
- **dass** mindestens eine Imprägnierung ein flammhemmendes Additiv aufweist.

2. Imprägnat nach Anspruch 1,
**dadurch gekennzeichnet,**
**dass** das flammhemmende Additiv ein intumeszenzbasiertes Flammschutzmittel ist und insbesondere eine Mischung aus einer Kohlenstoffquelle, einem Katalysator und einem Treibmittel aufweist.

3. Imprägnat nach Anspruch 1 oder 2,
**dadurch gekennzeichnet,**
**dass** das flammhemmende Additiv in Form von Partikeln eines Feststoffes in der Kunstharzmatrix enthalten ist.

4. Imprägnat nach Anspruch 3,
**dadurch gekennzeichnet,**
**dass** die Partikel im Mittel eine Korngröße von 1 bis 500 µm, bevorzugt von 5 bis 250 µm, besonders bevorzugt von 10 bis 100 µm aufweisen.

5. Imprägnat nach Anspruch 1 bis 4,
**dadurch gekennzeichnet,**
**dass** das flammhemmende Additiv in einer Menge von 1 bis 250 g/m², bevorzugt in einer Menge von 25 bis 200 g/m², besonders bevorzugt in einer Menge von 50 bis 150 g/m² vorliegt.

6. Imprägnat nach einem der Ansprüche 1 bis 5,
**dadurch gekennzeichnet,**
**dass** der Anteil des Kunstharzes und des flammhemmenden Additivs im getrockneten Zustand, einen Anteil von 50 % bis 500 %, bevorzugt von 150 % bis 400 %, besonders bevorzugt von 250 % bis 350 %, bezogen auf die Masse des trockenen, unbeharzten zellulosebasierten Materials beträgt.

7. Imprägnat nach einem der Ansprüche 1 bis 6,
**dadurch gekennzeichnet,**
**dass** das flammhemmende Additiv einseitig oder doppelseitig auf die Schicht (2) aufgebracht ist.

8. Laminat, insbesondere in Form eines Schichtstoffes oder einer beschichteten Trägerplatte,
- mit mindestens einem harzimprägnierten Imprägnat (2) nach einem der Ansprüche 1 bis 7 und
- mit mindestens einer weiteren Schicht aus einem Papier oder einer Trägerplatte.

9. Laminat nach Anspruch 8,
**dadurch gekennzeichnet,**
**dass** mindestens drei weitere Schichten aus einem Papier, insbesondere eine Vielzahl von beispielsweise 20, 50 oder 100 Schichten vorgesehen sind.

10. Platte
- mit einer Trägerplatte (4) und
- mit mindestens einem mit der Trägerplatte (4) verbundenen und ein flammhemmendes Additiv aufweisenden Imprägnat (2) nach einem der Ansprüche 1 bis 7.

11. Verfahren zur Herstellung eines Imprägnats,
- bei dem eine Schicht aus einem zellulosebasierten Material bereitgestellt wird und
- bei dem die Schicht mit einem flammhemmenden Additiv versehen wird.

12. Verfahren nach Anspruch 11,
bei dem das flammhemmende Additiv ein intumeszenzbasiertes Flammschutzmittel ist und insbesondere eine Mischung aus einer Kohlenstoffquelle, einem Katalysator und einem Treibmittel aufweist.

13. Verfahren nach Anspruch 11 oder 12,
- bei dem das flammhemmende Additiv in Form von Partikeln eines Feststoffes bereitgestellt wird und
- bei dem die Partikel vorzugsweise im Mittel eine Korngröße von 1 bis 500 µm, bevorzugt von 5 bis 250 µm, besonders bevorzugt von 10 bis 100 µm aufweisen.

14. Verfahren nach einem der Ansprüche 11 bis 13,
- bei dem das flammhemmendes Additiv in ein Imprägnierharz eingebracht, insbesondere dispergiert wird,
- bei dem das zellulosefaserbasierte Material mit dem mit einem flammhemmenden Additiv versehenen Imprägnierharz benetzt wird und
- bei dem das benetzte zellulosefaserbasierte Material getrocknet wird.

15. Verfahren nach einem der Ansprüche 14,
bei dem das flammhemmende Additiv in einer Menge von 10 bis 80%, bevorzugt von 25 bis 70 %, besonders bevorzugt von 40 bis 60 %, bezogen auf den Feststoffgehalt des Imprägnierharzes, eingebracht wird.

16. Verfahren nach Anspruch 14 oder 15,
bei dem das zellulosebasierte Material im trockenen Zustand mit dem mit einem flammhemmenden Additiv versehenen Imprägnierharz benetzt wird.

17. Verfahren nach Anspruch 14 oder 15,
bei dem das zellulosebasierte Material nach einer ersten Vorimprägnierung mit einem Imprägnierharz im noch nassen Zustand mit dem mit einem flammhemmenden Additiv versehenen Imprägnierharz benetzt wird.

18. Verfahren nach Anspruch 14 oder 15,
- bei dem das zellulosebasierte Material mit einer ersten Vorimprägnierung versehen und getrocknet wird und
- bei dem das zellulosebasierte Material mit dem mit einem flammhemmenden Additiv versehenen Imprägnierharz benetzt wird.

19. Verfahren einem der Ansprüche 14 bis 18,
bei dem die Benetzung mit dem mit einem flammhemmenden Additiv versehenen Imprägnierharz beidseitig erfolgt.

20. Verfahren nach einem der Ansprüche 11 bis 13,
bei dem das flammhemmende Additiv in Form von Partikeln eines Feststoffs auf das zellulosefaserbasierte Material aufgestreut wird.

21. Verfahren nach Anspruch 20,
bei dem die Partikel in einer Menge von 20 bis 240 g/m², bevorzugt in einer Menge von 40 bis 160 g/m², besonders bevorzugt in einer Menge von 60 bis 120 g/m² auf das zellulosefaserbasierte Material aufgestreut werden.

22. Verfahren nach Anspruch 20 oder 21,
- bei dem das zellulosebasierte Material nach einer Imprägnierung mit einem Imprägnierharz im noch nassen Zustand mit dem flammhemmenden Additiv in Form von Partikeln eines Feststoffs bestreut wird und
- bei dem das benetzte zellulosefaserbasierte Material getrocknet wird.

23. Verfahren nach Anspruch 20 oder 21,
- bei dem das zellulosebasierte Material mit einem Imprägnierharz imprägniert wird,
- bei dem ein erster Trockenschritt durchgeführt wird und
- bei dem anschließend das zellulosebasierte Material mit einem Imprägnierharz benetzt wird und
- bei dem das zellulosebasierte Material im noch nassen Zustand mit dem flammhemmenden Additiv in Form von Partikeln eines Feststoffs bestreut wird.

24. Verfahren nach Anspruch 20 oder 21,
- bei dem das flammhemmendes Additiv in ein Imprägnierharz eingebracht, insbesondere dispergiert wird,
- bei dem das zellulosefaserbasierte Material mit dem mit einem flammhemmenden Additiv versehenen Imprägnierharz benetzt wird,
- bei dem ein flammhemmendes Additiv in Form von Partikeln eines Feststoffes bereitgestellt wird,
- bei dem das flammhemmende Additiv in Form von Partikeln eines Feststoffs auf das zellulosefaserbasierte Material aufgestreut wird und
- bei dem das benetzte zellulosefaserbasierte Material getrocknet wird.

25. Verfahren zur Herstellung eines Laminats nach einem der Ansprüche 8 oder 9,
- bei dem ein Imprägnat nach einem der Ansprüche 1 bis 7 mit zumindest einer weiteren Schicht mittels einer Taktpresse, einer Mehretagenpresse oder einer Doppelbandpresse verpresst wird.

26. Verfahren zur Herstellung einer Platte,
- bei dem eine Trägerplatte bereitgestellt wird,
- bei dem mindestens ein ein flammhemmendes Additiv aufweisendes Imprägnat nach einem der Ansprüche 1 bis 7 bereitgestellt wird,
- bei dem eine Dekorschicht bereitgestellt wird und
- bei dem die Trägerplatte, das mindestens eine Imprägnat und die Dekorschicht unter Anwendung von Druck und Wärmeenergie verpresst werden.

27. Verfahren nach Anspruch 26,
bei dem mindestens ein ein flammhemmendes Additiv aufweisendes Imprägnat zwischen der Trägerplatte und der Dekorschicht angeordnet wird.

28. Verfahren nach Anspruch 26 oder 27,
bei dem mindestens ein ein flammhemmendes Additiv aufweisendes Imprägnat auf der von der Dekorschicht abgewandten Seite der Trägerplatte angeordnet wird.

29. Verfahren nach einem der Ansprüche 26 bis 28,
bei dem das Imprägnat im Verbund mit einer Dekorschicht als vorverarbeitetes Laminat bereitgestellt wird.
